# EUROPÄISCHE PATENTSCHRIFT

(11) **EP 3 346 047 B1**
(45) Veröffentlichungstag und Bekanntmachung des Hinweises auf die Patenterteilung: **22.11.2023**
(21) Anmeldenummer: 17210737.7
(22) Anmeldetag: 27.12.2017
(51) Int. Cl.: F28F 21/06, F28D 20/02, D06F 39/00, A47L 15/42, D06F 58/20

(54) **HAUSHALTSGERÄT MIT LATENTWÄRME-SPEICHERKÖRPER, LATENTWÄRME-SPEICHERKÖRPER SOWIE VERFAHREN ZU DEREN BETRIEB BZW. HERSTELLUNG**
HOUSEHOLD APPLIANCE WITH LATENT HEAT STORAGE BODY, LATENT HEAT STORAGE BODY AND METHOD FOR ITS OPERATION OR PRODUCTION
APPAREIL ÉLECTROMÉNAGER DOTÉ D'UN CORPS D'ACCUMULATEUR THERMIQUE À CHALEUR LATENTE, CORPS D'ACCUMULATEUR THERMIQUE À CHALEUR LATENTE AINSI QUE SON PROCÉDÉ DE FONCTIONNEMENT OU DE FABRICATION

(30) Priorität: 09.01.2017 DE 102017200173
(43) Veröffentlichungstag der Anmeldung: 11.07.2018
(73) Patentinhaber: BSH Hausgeräte GmbH, 81739 München (DE)
(72) Erfinder: Müller, Roland, 01219 Dresden (DE); Stolze, Andreas, 14612 Falkensee (DE); Waschull, Jörg, 01099 Dresden (DE); Wegener, Dirk, 16552 Schildow (DE); Wuttge, Oliver, 12157 Berlin (DE)

(56) Entgegenhaltungen:
- EP-A2- 2 559 963
- WO-A1-89/00670
- DE-A1-102012 208 619
- DE-A1-102012 223 613
- GB-A- 2 510 375

## Beschreibung

Die Erfindung betrifft ein Haushaltsgerät mit einem Latentwärme-Speicherkörper, ein Verfahren zu seinem Betrieb, sowie einen Latentwärme-Speicherkörper und ein Verfahren zu dessen Herstellung. Das Haushaltsgerät weist insbesondere einen Latentwärme-Speicherkörper, umfassend ein Phasenwechsel-Speichermedium, auf. Der Latentwärme-Speicherkörper umfasst insbesondere ein Phasenwechsel-Speichermedium, gemeinhin auch bezeichnet als "PCM" (Phase Change Material).

Bei der Benutzung von Haushaltsgeräten ist der wirtschaftliche Umgang mit der eingesetzten Energie sehr wichtig. Besonders viel Energie in Form von Wärme fällt bei Haushaltsgeräten wie z. B. Waschmaschinen, Wäschetrocknern oder Geschirrspülmaschinen an. Es ist daher bekannt, in einem Haushaltsgerät nicht mehr benötigte Wärmeenergie in einem darin enthaltenen Latentwärmespeicher zu speichern. Trockner mit einem Latentwärmespeicher sind bekannt.

Die Veröffentlichung DE 37 10 710 A1 beschreibt einen Kondensationswäschetrockner mit einem geschlossenen Umluftkreislauf, in dem ein Umluftventilator, ein elektrischer Lufterhitzer, ein Wäschebehälter, ein Wärmetauscher und ein Latentwärmespeicher mit einem Latentwärmespeichermittel angeordnet sind, wobei sich der Latentwärmespeicher im Umluftkreislauf zwischen dem Wärmetauscher und dem elektrischen Lufterhitzer befindet. Der Latentwärmespeicher speichert die in der feuchtwarmen Prozessluft aus der Trockenkammer enthaltene Wärmeenergie. Wenn der gesamte Inhalt des Latentwärmespeichers geschmolzen ist und die Kühlmittelzufuhr zum Wärmetauscher eingeschaltet werden muss, kann der elektrische Lufterhitzer gedrosselt oder ausgeschaltet werden, weil der Latentwärmespeicher zur Erhitzung der Prozessluft verwendet werden kann.

Die Veröffentlichung DE 102 24 940 A1 offenbart einen Kondensationswäschetrockner mit einer Trockenkammer, einem geschlossenen Prozessluftkreislauf, einem Prozessluftgebläse, einer Heizeinrichtung sowie einem im Prozessluftkreislauf entnehmbar angeordneten Latentwärmespeicher. Dieser ersetzt den allgemein üblichen, mit Luft arbeitenden Wärmeaustauscher.

Die Veröffentlichung DE 10 2008 006 348 A1 beschreibt einen Kondensationstrockner mit einer Trockenkammer für zu trocknende Gegenstände, einem Prozessluftkanal, in dem sich eine elektrische Heizung, ein Wärmetauscher und ein Gebläse befinden, einem Latentwärmespeicher und einem Kühlluftkanal, wobei der Latentwärmespeicher im Kühlluftkanal angeordnet ist.

Die Veröffentlichung WO 2011/054895 A1 beschreibt einen Trockner mit einer Trocknungskammer für zu trocknende Gegenstände und einem Latentwärmespeicher, der ein wärmeleitendes Füllmaterial aufweist, das insbesondere ein Metallschaum ist. Vorzugsweise ist das Speichermedium in den Schaum eingebracht. Hierdurch wird eine Verbesserung der Dynamik und Leistung des Latentwärmespeichers erreicht.

Ein Latentwärmespeicher enthält im Allgemeinen ein Phasenwechsel-Speichermedium (im Folgenden auch abgekürzt als "Speichermedium" bezeichnet), bei dem die für einen Phasenwechsel (Phasenübergang) des Speichermediums erforderliche Wärmeenergie gespeichert wird. Phasenwechsel-Speichermedien wechseln bei ihrer Anwendung für die Speicherung und Freisetzung von Wärmeenergie die Phase insbesondere von fest zu flüssig bzw. von flüssig zu fest. Bei der Wärmeaufnahme eines Phasenwechsel-Speichermediums schmilzt somit im Allgemeinen bei einem Phasenwechsel das Speichermedium wie z. B. ein Paraffin oder ein Salzhydrat.

Da das Speichermedium auch im geschmolzenen Zustand auftritt, wird es gekapselt. Ein ungekapseltes flüssig schmelzendes PCM verliert erstens seine Form/Integrität, was zum Verlust der Wärmeübertragungswege führen kann. Zweitens ist eine stoffliche Wechselwirkung des heißen, geschmolzenen PCM mit den anderen Konstruktionsmaterialien und Wärmeübertragungsmedien möglich. Dies zu verhindern, sind die zwei Hauptaufgaben der Kapselung.

Es wurde bereits versucht, die Wärmeleitung in einem das Speichermedium enthaltenden Latentwärme-Speicherkörper durch Zugaben zu verbessern, beispielsweise durch expandierten Graphit. So beschreibt die Veröffentlichung WO 98/04644 A ein Verfahren bzw.

System zur Speicherung von Wärme oder Kälte in einem Speicherverbundmaterial, ein derartiges Speicherverbundmaterial und ein Verfahren zu dessen Herstellung. Das Speicherverbundmaterial weist ein einen Phasenübergang durchlaufendes Material (PCM) auf, z. B. ein Paraffin, das in einer Matrix aus expandiertem Graphit eingebettet ist.

Die Veröffentlichung DE 10 2012 223 613 A1 beschreibt ein Haushaltsgerät mit einem Latentwärmespeicher, umfassend ein Phasenwechsel-Speichermedium und einen eine Wärmeleitfähigkeit verbessernden kohlenstoffhaltigen Zusatzstoff, wobei der kohlenstoffhaltige Zusatzstoff Kohlenstoffnanoröhren (CNTs) umfasst. Das Phasenwechsel-Speichermedium enthält mindestens ein anorganisches Salzhydrat und/oder eine organische Verbindung. In Ausführungsformen ist das Phasenwechsel-Speichermedium ein Salzhydrat, das mindestens ein Salz aus der Gruppe enthält, die aus Natriumacetat, Natriumthiosulfat, Magnesiumnitrat, Ammoniumnitrat und Magnesiumchlorid besteht. Schließlich enthält das Phasenwechsel-Speichermedium in einer Ausführungsform ein Paraffin. Überdies weist das Phasenwechsel-Speichermedium einen Phasenübergang vom flüssigen in den festen Zustand im Temperaturbereich von 30 bis 65°C auf.

Die Veröffentlichung DE 10 2011 052 864 A1 bzw. EP 2 559 963 A2 beschreibt eine Latentwärmespeichervorrichtung mit verbundenen Latentwärmespeicherabschnitten, die entlang einer Linie angeordnet sind, wobei diese wenigstens einen Abstandshalter aufweisen, der im Wesentlichen quer zur Linie vorspringt, um wenigstens einen der Latentwärmespeicherabschnitte auf Abstand zu einem angrenzenden Element zu halten. Dadurch soll verhindert werden, dass sich der Latentwärmespeicherabschnitt an ein angrenzendes Element anlegt und somit ein Wärmeaustausch mit einem Wärmeträgermedium über die Oberfläche dieses Latentwärmespeicherabschnitts deutlich reduziert ist. Dabei kann es hilfreich sein, wenn zumindest einer der Latentwärmespeicherabschnitte wenigstens eine der folgenden Anforderungen erfüllt: Der Latentwärmespeicherabschnitt ist als Hohlkörper ausgebildet und vorzugsweise mit einem Phasenwechselmaterial befüllt; der Latentwärmespeicherabschnitt ist im Wesentlichen kissenförmig ausgebildet; der Latentwärmespeicherabschnitt umfasst einen Hohlraum, der aus wenigstens einer flexiblen Folie mit wenigstens einer Schweißnaht ausgebildet ist, wobei die Schweißnaht den Hohlraum zumindest abschnittsweise, vorzugsweise vollumfänglich, umgibt und/oder verschließt. Überdies kann es hilfreich sein, wenn die Latentwärmespeichervorrichtung als Folienschlauch mit wenigstens einer Foliennaht ausgebildet ist. Vorteilhafte Materialien für den Folienschlauch sind Elastomere oder thermoplastische Kunststoffe, vorzugsweise Polyamid (PA), Polyethylen (PE), Polypropylen (PP), Polyvinylchlorid (PVC), Polymethylmethacrylat (PMMA), Polyethylenterepthalat (PET) oder Polyethylentetrafluorethylen (PTFE).

Die Veröffentlichung DE 20 2010 013 679 U1 beschreibt eine Anordnung zur Latentwärmespeicherung, umfassend eine Latentwärmespeichervorrichtung mit beweglich verbundenen Latentwärmespeicherabschnitten, welche entlang einer gekrümmten Linie angeordnet sind, wobei an der Krümmungsinnenseite wenigstens ein von einem Wärmeträgermedium durchfließbarer Kanal ausgebildet ist.

Die Veröffentlichung WO 89/00670 beschreibt einen Röhrenbehälter für die Aufbewahrung von PCM (phase change material, d.h. Phasenwechselmaterial) zur Speicherung von Wärme oder Kälte, wobei der mit PCM gefüllte Röhrenbehälter angepasst ist, durch eine Phasenwechselaktion Wärme zu speichern und abzugeben oder aber zu kühlen. Dabei umfasst der Speicherröhrenbehälter ein geschlossenes Rohr mit einer Wand, welche Flexibilität aufweist, um einen engen Kontakt mit der inneren Wandoberfläche des Speicherröhrenbehälters während der festen und flüssigen Phase des PCM bereitzustellen, wenn der besagte Speicherröhrenbehälter horizontal angeordnet ist und von seiner Spitze her unterstützt wird. Der Speicherröhrenbehälter soll hierzu entsprechende mechanische Eigenschaften aufweisen und die Annahme eines kreis- und ellipsenförmigen Querschnitts ermöglichen.

Aufgabe der vorliegenden Erfindung war es vor diesem Hintergrund, ein Haushaltsgerät mit einem Latentwärme-Speicherkörper, enthaltend ein Phasenwechsel-Speichermedium, bereitzustellen, bei dem ein Latentwärme-Speicherkörper mit einer verbesserten Effizienz und Handhabbarkeit betrieben werden kann. In bevorzugten Ausführungsformen soll ein rascherer Wärmeaustausch möglich sein, insbesondere durch effizientere und schnellere Aufnahme von Wärmeenergie durch ein eingesetztes Phasenwechsel-Speichermedium.

Die Lösung dieser Aufgabe wird nach dieser Erfindung erreicht durch ein Haushaltsgerät, ein Verfahren zu seinem Betrieb sowie einen Latentwärme-Speicherkörper und ein Verfahren zu seiner Herstellung mit den Merkmalen der entsprechenden unabhängigen Patentansprüche. Bevorzugte Ausführungsformen des erfindungsgemäßen Haushaltsgeräts sind in den jeweiligen abhängigen Patentansprüchen aufgeführt. Bevorzugten Ausführungsformen des erfindungsgemäßen Haushaltsgerätes entsprechen bevorzugte Ausführungsformen des Verfahrens zu seinem Betrieb, des Latentwärme-Speicherkörpers sowie des Verfahrens zu dessen Herstellung, und umgekehrt, auch wenn dies hierin nicht explizit festgestellt ist.

Gegenstand der Erfindung ist somit ein Haushaltsgerät mit einem Latentwärme-Speicherkörper, umfassend ein Phasenwechsel-Speichermedium, wobei sich im Latentwärme-Speicherkörper das Phasenwechsel-Speichermedium in einer Kunststoffhülle befindet und der Latentwärme-Speicherkörper derart ausgestaltet ist, dass er in einem ersten Zustand des Phasenwechsel-Speichermediums bei einer Temperatur T₁ eine von einer Kreisform abweichende Querschnittsfläche Q₁ und in einem zweiten Zustand des Phasenwechsel-Speichermediums bei einer Temperatur T₂ > T₁ eine Querschnittsfläche Q₂ > Q₁ hat, und beim Übergang vom ersten in den zweiten Zustand ein Phasenwechsel stattfindet, wobei der Latentwärme-Speicherkörper im ersten Zustand einen runden, aber nicht kreisrunden Querschnitt aufweist und im zweiten Zustand einen kreisförmigen Querschnitt aufweist und die Kunststoffhülle von dem Phasenwechsel-Speichermedium vollständig ausgefüllt ist, so dass insbesondere auch kein Luft enthaltender Hohlraum ausgebildet wird, und ein Quotient Q = Q₂/Q₁ größer ist als ein Quotient U = U₂/U₁, wobei U₁ der Umfang der Querschnittsfläche Q₁ ist und U₂ der Umfang der Querschnittsfläche Q₂ ist, und wobei der Quotient U im Bereich von 1,0 bis 1,10 liegt und die Zunahme der Querschnittsfläche von Q₁ zu Q₂ 5 bis 15 %, bezogen auf Q₁, beträgt.

Hierbei liegt der Quotient U vorzugsweise im Bereich von 1,0 bis 1,07.

Es ist erfindungsgemäß überdies bevorzugt, dass die Kunststoffhülle aus einem thermoplastischen Kunststoff besteht oder diesen enthält. Geeignete thermoplastische Kunststoffe sind beispielsweise Polyethylen, Polypropylen, Poly-propylen-ethylen-copolymere, LLDPE-Polymere (Copolymere von Ethylen mit Olefinen mit mehr als 4 C-Atomen).

Bevorzugt enthält das Phasenwechsel-Speichermedium mindestens ein anorganisches Salzhydrat und/oder eine organische Verbindung.

Vorzugweise enthält das Haushaltsgerät im Latentwärme-Speicherkörper ein Phasenwechsel-Speichermedium mit einem Phasenübergang vom flüssigen in den festen Zustand, also vom ersten in den zweiten Zustand, im Temperaturbereich von 30 bis 85°C, noch mehr bevorzugt im Temperaturbereich von 35 bis 75°C und ganz besonders bevorzugt im Temperaturbereich von 45 bis 55°C.

In einer bevorzugten Ausführungsform der Erfindung enthält das im Haushaltsgerät eingesetzte Phasenwechsel-Speichermedium ein Salzhydrat, wobei das Salzhydrat vorzugsweise mindestens ein Salz aus der Gruppe, die aus Natriumacetat, Natriumthiosulfat, Magnesiumnitrat, Ammoniumnitrat und Magnesiumchlorid besteht, enthält. Als Zusätze zu anderen Salzen können auch Kaliumnitrat und Lithiumnitrat verwendet werden.

Beispiele für geeignete Salzhydrate sind:
- eine Mischung von 58,7 Gew.-% Mg(NO₃)₂ · 6 H₂O und 41,3 Gew.-% MgCl₂ · 6 H₂0 mit einem Schmelzpunkt von 59°C;
- eine Mischung von 61,5 Gew.-% Mg(NO₃)₂ . 6 H₂O und 38,5 Gew.-% NH₄NO₃ mit einem Schmelzpunkt von 52°C;
- CH₃COONa (Natriumacetat) . 3 H₂O mit einem Schmelzpunkt von 54°C; und
- Na₂S₂O₃ (Natriumthiosulfat) . 5 H₂O mit einem Schmelzpunkt von 48°C.

In einer weiteren bevorzugten Ausführungsform der Erfindung enthält das Speichermedium eine organische Verbindung. Beispiele für geeignete organische Verbindungen, die auch in Mischung verwendet werden können, oder Mischungen von organischen Verbindungen sind:
- Paraffine (Wärmeparaffine) mit unterschiedlichen Schmelzpunkten;
- Myristinsäure mit einem Schmelzpunkt von 54,4°C;
- Behensäure mit einem Schmelzpunkt von 80°C;
- Stearinsäure mit einem Schmelzpunkt von 69°C;
- eine Mischung von 89 Gew.-% Palmitinsäure und 11 Gew.-% Acetamid mit einem Schmelzpunkt von 57,2°C;
- eine Mischung von 74,9 Gew.-% Palmitinsäure und 25,1 Gew.-% Propionamid mit einem Schmelzpunkt von 50°C.

Überdies kann als Phasenwechsel-Speichermedium auch eine Mischung von organischen und anorganischen Verbindungen verwendet werden. Ein Beispiel hierfür ist eine Mischung von 80 Gew.-% Acetamid und 20 Gew.-% NaNO₃ mit einem Schmelzpunkt von 59°C.

Erfindungsgemäß besonders bevorzugt ist ein Haushaltsgerät, in welchem das Speichermedium organische Verbindungen enthält oder aus diesen besteht. Besonders bevorzugt ist es hierbei, wenn das Speichermedium ein Paraffin enthält.

Schließlich ist es erfindungsgemäß bevorzugt, dass das Phasenwechsel-Speichermedium und/oder die Kunststoffhülle einen die Wärmeleitfähigkeit erhöhenden Zusatzstoff enthält. Dieser ist im Allgemeinen im Phasenwechsel-Speichermedium dispergiert. Der Zusatzstoff enthält vorzugsweise Kohlenstoff oder besteht aus diesem. Ganz besonders bevorzugt ist der Zusatzstoff ausgewählt unter Graphit, insbesondere geblähtem Graphit, Kohlenstoffnanoröhren (CNTs) und intrinsisch elektrisch leitfähigen organischen Polymeren.

In einer bevorzugten Ausführungsform der Erfindung enthält der Latentwärme-Speicherkörper geblähten Graphit, vorzugsweise in einer Menge von höchstens 15 Gew.-%, bezogen auf die Gesamtmasse von Speichermedium und kohlenstoffhaltigen Zusatzstoffen.

In einer weiteren bevorzugten Ausführungsform enthält der kohlenstoffhaltige Zusatzstoff Kohlenstoffnanoröhren (CNTs). Falls verwendet, enthält im erfindungsgemäßen Haushaltsgerät der Latentwärmespeicherkörper Kohlenstoffnanoröhren vorzugsweise in einer Menge von 0,1 bis 15 Gew.-%, bezogen auf die Gesamtmasse des Latentwärme-Speichermediums.

Kohlenstoffnanoröhren (carbon nanotubes, CNTs) im Sinne der Erfindung sind insbesondere mikroskopisch kleine röhrenförmige Gebilde aus Kohlenstoffatomen, die eine wabenartige Struktur mit Sechsecken und jeweils drei Bindungspartnern einnehmen. Kohlenstoffnanoröhren haben im Allgemeinen einen Durchmesser von 0,4 nm bis 50 nm und eine Länge von 10 µm bis 10 mm. Die Kohlenstoffnanoröhren können ein oder mehrwandig sein. Vorzugsweise sind die Kohlenstoffnanoröhren mehrwandig.

Die für die Verwendung im Latentwärme-Speicherkörper einsetzbaren Kohlenstoffnanoröhren sind auf verschiedene Weise herstellbar, beispielsweise durch Verdampfung von Graphit mit einem Laser oder durch eine Lichtbogenentladung zwischen Kohlenstoffelektroden. Es werden vorzugsweise Kohlenstoffnanoröhren eingesetzt, die erhältlich sind durch Abscheidung aus der Dampfphase bei der katalytischen Zersetzung von Kohlenwasserstoffen (CVD).

Erfindungsgemäß weist der Latentwärme-Speicherkörper im ersten Zustand einen runden, aber nicht kreisrunden Querschnitt auf, vorzugsweise einen elliptischen Querschnitt, und im zweiten Zustand einen im Wesentlichen kreisförmigen Querschnitt auf.

Damit kann einer Volumenzunahme aufgrund des Übergangs im Phasenwechsel-Speichermedium zwischen dem ersten Zustand und dem zweiten Zustand Rechnung getragen werden, ohne dass es zu schädlichen Spannungen aufgrund einer übermäßigen Dehnung der Kunststoffhülle kommt.

Die Zunahme der Querschnittsfläche, d. h. von Q₁ zu Q₂, beträgt erfindungsgemäß, bezogen auf Q₁, vorzugsweise 8 bis 12 %. Dabei sollte eine mögliche Zunahme des Umfangs der Querschnittsfläche vorzugsweise weniger als 5 %, insbesondere weniger als 2 % und noch mehr bevorzugt weniger als 1 % betragen. Dies kann in Abhängigkeit vom Latentwärme-Speichermedium bzw. dem dieses enthaltenden Formkörper durch Auswahl einer geeigneten Kunststoffhülle eingestellt werden. Der Umfang der Querschnittsfläche ist dabei im Allgemeinen auf eine Dehnung der Kunststoffhülle aufgrund der Temperaturerhöhung sowie eine geringe Steigerung des Drucks auf die Kunststoffhülle aufgrund des sich ausdehnenden Phasenwechsel-Mediums zurückzuführen.

Die Form der Latentwärme-Speicherkörper ist ansonsten nicht begrenzt. So können die Latentwärme-Speicherkörper in Form von beispielsweise Kissen oder Stäben vorliegen. Dabei liegt in der Regel das Phasenwechsel-Speichermedium in einer zugeschweißten Kunststofffolie als Kunststoffhülle vor. Je nach Herstellung, können dabei zwei oder mehr Latentwärme-Speicherkörper über eine "Schweißnaht" miteinander verbunden sein. Dementsprechend können die erfindungsgemäßen Latentwärme-Speicherkörper einzeln oder über die Schweißnaht verbunden eingesetzt werden. Da bei dieser Anordnung aufgrund der Schweißnaht und/oder einer im Allgemeinen in einem gewissen Ausmaß vorhandenen Flexibilität des Kunststoffes die Latentwärme-Speicherkörper gegeneinander verschiedene Positionen einnehmen können, kann die Anordnung an einen beabsichtigten Einsatzzweck, beispielsweise zum Wärmetausch in einer Waschmaschine oder einem Trockner, angepasst werden.

In einer bevorzugten Ausführungsform liegen die Latentwärme-Speicherkörper als Stäbe vor, welche über die zur Umhüllung benutzte Kunststofffolie miteinander verbunden sind. Bei einer solchen Anordnung können die Latentwärme-Speicherkörper als Verbund in Form einer Platte oder eines Bandes gefertigt und eingesetzt werden.

Wenn die Latentwärme-Speicherkörper in Form von Kissen eingesetzt werden, so können einzelne Kissen, beispielsweise als Schüttung, eingesetzt werden. Möglich ist zudem ein Einsatz in Form von im Allgemeinen in zwei Dimensionen flexiblen Matten oder Bändern. Eine solche Anordnung ist im Allgemeinen erhältlich dadurch, dass vorgeformte Kissen aus Phasenwechsel-Speichermedium im Allgemeinen in einer größeren Anzahl von einer Kunststofffolie umhüllt werden, wobei diese dann möglichst nahe am Phasenwechsel-Speichermedium mit einer ersten Schweißnaht verschweißt wird, so dass zunächst durch die Kunststofffolie verbundene Latentwärme-Speicherkörper erhalten werden. Für eine Schüttung verwendbare einzelne Kissen können dann durch ein Abtrennen von der Kunststoffhülle entlang der ersten Schweißnaht erhalten werden. Eine zweite Schweißnaht kann Teile der Kunststofffolie weiter entfernt vom Phasenwechsel-Speichermedium und daher von der Kunststoffhülle verbinden.

Das erfindungsgemäße Haushaltsgerät ist nicht eingeschränkt. Vorzugsweise ist das Haushaltsgerät jedoch ein Trockner, ein Waschtrockner, eine Waschmaschine oder eine Geschirrspülmaschine. Ein Waschtrockner ist hierbei ein Kombinationsgerät, das über eine Waschfunktion zum Waschen von Wäsche und über eine Trocknungsfunktion zum Trocknen von feuchter Wäsche verfügt.

Besonders vorteilhaft ist das Haushaltsgerät daher ein Trockner, der eine Trockenkammer für zu trocknende Gegenstände, einen Prozessluftkanal, in dem sich eine elektrische Heizung, ein Wärmetauscher und ein Gebläse befinden, und einen Kühlluftkanal aufweist. Vorzugsweise ist hierbei ein Latentwärmespeicher im Kühlluftkanal oder einem Umluftkanal angeordnet. Bei einem solchen Latentwärmespeicher findet im Allgemeinen ein Wärmetausch zwischen Latentwärme-Speicherkörpern und Kühlluftkanal bzw. Umluftkanal vermittelt durch ein Wärmeüberträgermedium wie Wasser oder Luft statt. Es ist allerdings auch ein direkter Kontakt zwischen Kühlluftkanal bzw. Umluftkanal und Latentwärme-Speicherkörper möglich.

Bei Anordnung des Latentwärmespeichers im Kühlluftkanal sind der Volumenstrom und die Leistung des Wärmetauschers, z. B. eines Luft-Luft-Wärmetauschers, im Allgemeinen auf die Entladetemperatur abgestimmt, so dass die Differenz zwischen der Entladetemperatur und der Temperatur der Kühlluft beim Austritt aus dem Wärmetauscher genügend groß ist, um eine effiziente Aufladung des Latentwärmespeicher(medium)s zu ermöglichen. Diese Temperaturdifferenz beträgt im Allgemeinen 3 bis 25°C, vorzugsweise 5 bis 20° und ganz besonders bevorzugt 8 bis 15°C. Die Ladung des Speichers entspricht dem Schmelzvorgang mit Aufnahme von Wärme, die Entladung dem Erstarren des Latentwärme-Speichermediums und damit der Abgabe der gespeicherten Wärme.

Die im Latentwärmespeicher durch Abkühlung von erwärmter Kühlluft gespeicherte Wärmeenergie kann für den Fall, dass das Haushaltsgerät ein Wäschetrockner ist, zur Erwärmung von Prozessluft im Prozessluftkanal und/oder der Trockenkammer herangezogen werden. Erfindungsgemäß ist es bevorzugt, wenn die Erwärmung der Prozessluft in der Trocknungskammer, d. h. als Ergebnis eines Wärmetausches zwischen Latentwärme-Speicherkörper und Trocknungskammer, stattfindet. Hierbei ist es bevorzugt, dass eine dem Kühlluftkanal abgewandte Oberfläche des Latentwärmespeichers bzw. Latentwärme-Speicherkörpers von der Trocknungskammer maximal 5 cm, vorzugsweise maximal 3 cm und besonders bevorzugt maximal 2 cm beabstandet ist. Es ist überdies bevorzugt, dass die dem Kühlluftkanal abgewandte Oberfläche des Latentwärmespeichers bzw. Latentwärme-Speicherkörpers konkav ist. Bei dieser Ausführungsform ist es überdies bevorzugt, dass ein Abstand zwischen der konkaven Oberfläche und einer Außenoberfläche der Trocknungskammer zwischen 0,5 und 5 cm beträgt.

Ein in einem Kondensationstrockner eingesetzter Latentwärmespeicher weist vorzugsweise auf einer dem Kühlluftkanal zugewandten Oberfläche des Latentwärme-Speicherkörpers Rippen auf. Diese Rippen können der Führung der Kühlluft durch den Latentwärmespeicher dienen. Alternativ oder zusätzlich hierzu können die Rippen mit einem Speichermedium gefüllt sein.

Für den Betrieb eines Kondensationstrockners als erfindungsgemäßem Haushaltsgerät hat es sich als vorteilhaft erwiesen, wenn im Prozessluft- oder Kühlluftkanal vor und hinter einem darin befindlichen Latentwärmespeicher jeweils ein Temperatursensor angeordnet ist. Die von den beiden Temperatursensoren gemessenen Temperaturen, insbesondere deren Differenz, erlaubt eine Aussage zum Ladezustand des Latentwärmespeichers. Hierbei bedeutet Ladezustand das Ausmaß des Phasenübergangs vom flüssigen in den festen Zustand im Phasenwechsel-Speichermedium des Latentwärmespeichers. Der Ladezustand ist somit ein Maß für die gespeicherte Wärmeenergie. Die Temperatursensoren sind vorzugsweise mit einer Steuereinrichtung verbunden, die automatisch eine Abschaltung oder Zuschaltung der elektrischen Heizung auslöst.

Die erfindungsgemäß einsetzbaren Phasenwechsel-Speichermedien zeigen eine mehr oder weniger ausgeprägte Tendenz zur Unterkühlung. Erfindungsgemäß kann zwar ein Speichermedium in Form einer unterkühlten Lösung verwendet werden. Vorzugsweise wird jedoch eine Unterkühlung vermieden. Zu diesem Zweck wird dem Speichermedium häufig ein Keimbildner zugesetzt. Dem Fachmann sind für verschiedene Speichermedien geeignete Keimbildner bekannt.

Gegenstand der Erfindung ist außerdem ein Verfahren zum Betrieb eines Haushaltsgerätes mit einem Latentwärme-Speicherkörper, umfassend ein Phasenwechsel-Speichermedium, wobei sich im Latentwärme-Speicherkörper das Phasenwechsel-Speichermedium in einer Kunststoffhülle befindet und der Latentwärme-Speicherkörper derart ausgestaltet ist, dass er in einem ersten Zustand des Phasenwechsel-Speichermediums bei einer Temperatur T₁ eine von einer Kreisform abweichende Querschnittsfläche Q₁ und in einem zweiten Zustand des Phasenwechsel-Speichermediums bei einer Temperatur T₂ > T₁ eine Querschnittsfläche Q₂ > Q₁ hat, und beim Übergang vom ersten in den zweiten Zustand ein Phasenwechsel stattfindet, wobei der Latentwärme-Speicherkörper im ersten Zustand einen runden, aber nicht kreisrunden Querschnitt aufweist und im zweiten Zustand einen kreisförmigen Querschnitt aufweist und die Kunststoffhülle von dem Phasenwechsel-Speichermedium vollständig ausgefüllt ist, so dass insbesondere auch kein Luft enthaltender Hohlraum ausgebildet wird, und ein Quotient Q = Q₂/Q₁ größer ist als ein Quotient U = U₂/U₁, wobei U₁ der Umfang der Querschnittsfläche Q₁ ist und U₂ der Umfang der Querschnittsfläche Q₂ ist, wobei der Quotient U im Bereich von 1,0 bis 1,10 liegt und die Zunahme der Querschnittsfläche von Q₁ zu Q₂ 5 bis 15 %, bezogen auf Q₁, beträgt und wobei im Verfahren eine im Haushaltsgerät erzeugte oder dem Haushaltsgerät zugeführte Wärmeenergie im Latentwärme-Speicherkörper über einen Phasenwechsel im Phasenwechsel-Speichermedium gespeichert wird.

In einer bevorzugten Ausführungsform ist das Verfahren ein Verfahren zum Betrieb eines Kondensationstrockners mit einer Trocknungskammer für zu trocknende Gegenstände, einem Prozessluftkanal, in dem sich eine elektrische Heizung, ein Wärmetauscher und ein Gebläse befinden, mindestens einem Latentwärme-Speicherkörper und einem Kühlluftkanal, wobei der Latentwärme-Speicherkörper im Kühlluftkanal angeordnet ist, und wobei bei eingeschalteter elektrischer Heizung im Wärmetauscher erwärmte Kühlluft an den ein Speichermedium enthaltenden Latentwärme-Speicherkörper geführt wird und der Latentwärme-Speicherkörper aufgeladen wird, indem in der erwärmten Kühlluft enthaltene Wärmeenergie im Speichermedium gespeichert wird.

In einer bevorzugten Ausführungsform dieses Verfahrens wird für die Speicherung der in der erwärmten Kühlluft enthaltenen Wärmeenergie ein Phasenübergang im Phasenwechsel-Speichermedium von fest nach flüssig herangezogen. Vorzugsweise wird hierbei die Speicherung der Wärmeenergie durchgeführt, bis der Phasenübergang im Speichermedium von fest nach flüssig beendet ist.

Ganz besonders bevorzugt wird beim erfindungsgemäßen Verfahren eine im Allgemeinen vorhandene elektrische Heizung nach Beendigung des Phasenübergangs abgeschaltet. Die im Latentwärme-Speicherkörper gespeicherte Energie kann dann für ein weiteres Heizen verwendet werden. In einem Trockner sinkt daraufhin im Allgemeinen die Temperatur der Prozessluft und der Kühlluft. Die Prozessluft in der Trockenkammer wird dann über die im Speichermedium gespeicherte Wärmeenergie erwärmt, wobei die Trocknung von Wäschestücken in der Trockenkammer dann im Allgemeinen auf einem niedrigeren Temperaturniveau stattfindet als bei ausschließlicher Verwendung einer elektrischen Heizung.

Überdies ist Gegenstand der Erfindung ein Latentwärme-Speicherkörper, umfassend ein Phasenwechsel-Speichermedium, wobei sich im Latentwärme-Speicherkörper das Phasenwechsel-Speichermedium in einer Kunststoffhülle befindet und der Latentwärme-Speicherkörper derart ausgestaltet ist, dass er in einem ersten Zustand des Phasenwechsel-Speichermediums bei einer Temperatur T₁ eine von einer Kreisform abweichende Querschnittsfläche Q₁ und in einem zweiten Zustand des Phasenwechsel-Speichermediums bei einer Temperatur T₂ > T₁ eine Querschnittsfläche Q₂ > Q₁ hat, und beim Übergang vom ersten in den zweiten Zustand ein Phasenwechsel stattfindet, wobei der Latentwärme-Speicherkörper im ersten Zustand einen runden, aber nicht kreisrunden Querschnitt aufweist und im zweiten Zustand einen kreisförmigen Querschnitt aufweist und die Kunststoffhülle von dem Phasenwechsel-Speichermedium vollständig ausgefüllt ist, so dass insbesondere auch kein Luft enthaltender Hohlraum ausgebildet wird, und ein Quotient Q = Q₂/Q₁ größer ist als ein Quotient U = U₂/U₁, wobei U₁ der Umfang der Querschnittsfläche Q₁ ist und U₂ der Umfang der Querschnittsfläche Q₂ ist, und wobei der Quotient U im Bereich von 1,0 bis 1,10 liegt und die Zunahme der Querschnittsfläche von Q₁ zu Q₂ 5 bis 15 %, bezogen auf Q₁, beträgt.

Schließlich ist Gegenstand der Erfindung auch ein Verfahren zur Herstellung eines Latentwärme-Speicherkörpers, umfassend ein Phasenwechsel-Speichermedium, wobei sich im Latentwärme-Speicherkörper das Phasenwechsel-Speichermedium in einer Kunststoffhülle befindet und der Latentwärme-Speicherkörper derart ausgestaltet ist, dass er in einem ersten Zustand des Phasenwechsel-Speichermediums bei einer Temperatur T₁ eine Querschnittsfläche Q₁ und in einem zweiten Zustand des Phasenwechsel-Speichermediums bei einer Temperatur T₂ > T₁ eine Querschnittsfläche Q₂ > Q₁ hat, und beim Übergang vom ersten in den zweiten Zustand ein Phasenwechsel stattfindet, wobei der Latentwärme-Speicherkörper im ersten Zustand einen runden, aber nicht kreisrunden Querschnitt aufweist und im zweiten Zustand einen kreisförmigen Querschnitt aufweist und die Kunststoffhülle von dem Phasenwechsel-Speichermedium vollständig ausgefüllt ist, so dass insbesondere auch kein Luft enthaltender Hohlraum ausgebildet wird, und ein Quotient Q = Q₂/Q₁ größer ist als ein Quotient U = U₂/U₁, wobei U₁ der Umfang der Querschnittsfläche Q₁ ist und U₂ der Umfang der Querschnittsfläche Q₂ ist, und wobei der Quotient U im Bereich von 1,0 bis 1,10 liegt und die Zunahme der Querschnittsfläche von Q₁ zu Q₂ 5 bis 15 %, bezogen auf Q₁, beträgt; wobei das Verfahren die folgenden Schritte umfasst:
(a) Bereitstellen des Phasenwechsel-Speichermediums;
(b) Umhüllen des Phasenwechsel-Speichermediums mit einer Kunststofffolie;
(c) Verschweißen der Kunststofffolie und Ausbilden eines Latentwärme-Speicherkörpers, umfassend einen Formkörper, welcher das Phasenwechsel-Speichermedium im ersten Zustand mit einem runden, aber nicht kreisförmigen Querschnitt mit einer Querschnittsfläche Q₁ enthält.

Hierbei ist der Begriff "Kunststofffolie" breit zu verstehen, indem die Kunststofffolie in verschiedenen Formen existieren kann, in denen sie beispielsweise auch in gefalteter oder geschweißter Form vorliegen kann, wobei die Kunststofffolie aber im Allgemeinen keinen Raum dicht abschließt. Insbesondere umfasst der Begriff "Kunststofffolie" daher auch einen offenen Kunststoffbeutel.

In einer bevorzugten Ausführungsform dieses Verfahrens werden die folgenden Schritte durchgeführt:
(a1) Herstellen eines Formkörpers, welcher das Phasenwechsel-Speichermedium im ersten Zustand mit einer von einer Kreisform abweichenden Querschnittsfläche Q₁ enthält;
(b1) Umhüllen des im Schritt (a1) erhaltenen Formkörpers mit einer Kunststofffolie; und
(c1) Verschweißen der Kunststofffolie und Ausbilden der Kunststoffhülle;
wobei die Schritte (a1), (b1) und (c1) derart durchgeführt werden, dass ein Latentwärme-Speicherkörper ausgebildet wird, umfassend einen Formkörper, welcher das Phasenwechsel-Speichermedium im ersten Zustand mit einem runden, aber nicht kreisförmigen Querschnitt mit einer Querschnittsfläche Q₁ enthält.

In einer hierzu alternativen bevorzugten Ausführungsform dieses Verfahrens werden die folgenden Schritte durchgeführt:
(a2) Bereitstellen eines offenen Kunststoffbeutels;
(b2) Befüllen des Kunststoffbeutels mit dem Phasenwechsel-Speichermedium in flüssiger Form; und
(c2) Zuschweißen des Kunststoffbeutels und Ausbilden der Kunststoffhülle;
wobei die Schritte (a2), (b2) und (c2) derart durchgeführt werden, dass ein Latentwärme-Speicherkörper ausgebildet wird, umfassend einen Formkörper, welcher das Phasenwechsel-Speichermedium im ersten Zustand mit einem runden, aber nicht kreisförmigen Querschnitt mit einer Querschnittsfläche Q₁ enthält.

Dies bedeutet im Allgemeinen dass Form und Größe des Kunststoffbeutels, die Menge an eingefülltem Phasenwechsel-Speichermedium sowie der Schritt des Zuschweißens so aufeinander abgestimmt sind, dass die obige Bedingung für den Querschnitt des Formkörpers realisiert wird.

Die verschweißte Kunststofffolie bzw. der zugeschweißte Kunststoffbeutel können auch als geschlossene Kapselhülle bezeichnet werden.

Im Schritt (a1) wird ein Formkörper vorzugsweise durch Gießen, Extrudieren oder Pressen des Phasenwechsel-Speichermediums in einer geeigneten Matrize, z.B. einer Gießform, derart hergestellt, dass das Phasenwechsel-Speichermedium im ersten Zustand eine runde, aber von einer Kreisform abweichende Querschnittsfläche Q₁ aufweist. Die Matrize kann zur gleichzeitigen Herstellung einer Vielzahl von Phasenwechsel-Speicherkörpern ausgestaltet sein.

Im Schritt (b1) erfolgt ein Umhüllen des im Schritt (a1) erhaltenen Formkörpers mit einer Kunststofffolie. Hierzu kann der Formkörper der Matrize entnommen und von der Kunststofffolie umhüllt werden. Allerdings können die Schritte (a1) und (b1) auch gleichzeitig durchgeführt werden, so dass beispielsweise das Phasenwechsel-Speichermedium durch Gießen oder Extrudieren in eine Kunststofffolie mit einer geeigneten Form, z.B. einer Sackform, eingebracht werden kann. Dabei kann die Kunststofffolie auch in eine geeignete Matrize eingelegt sein. Zur Einstellung einer von einer Kreisform abweichenden Querschnittsfläche Q₁ kann alternativ die mit dem Phasenwechsel-Speichermedium gefüllte Kunststofffolie in eine geeignete Matrize eingebracht werden, in welcher das zunächst im zweiten Zustand, d.h. im Allgemeinen in flüssiger Form, vorliegende Phasenwechsel-Speichermedium abkühlt. Hierbei kann die Abkühlung aktiv vorgenommen werden. Alternativ kann das Phasenwechsel-Speichermedium zur Abkühlung bis zur Aushärtung des flüssigen Phasenwechsel-Speichermediums sich selbst überlassen werden.

Der Umfang U des Speichermedium-Formkörpers wird vorzugsweise so gewählt, dass sich bei einem Phasenwechsel, d. h. im Allgemeinen beim Übergang vom ersten in den zweiten Zustand, ein Latentwärme-Speicherkörper mit einem im Wesentlichen kreisförmigen Querschnitt ergibt, und sich der Druck des Phasenwechsel-Speichermediums auf die Kunststofffolie im Wesentlichen nicht ändert. Vorzugsweise nimmt der Druck auf die Kunststofffolie um maximal 2 % zu, wenn ein Wechsel vom ersten zum zweiten Zustand stattfindet.

Die Änderung der Form des Querschnitts der Latentwärme-Speicherkörper wird im Allgemeinen von der Art des Speichermediums abhängen. Beispielsweise könnte eine Änderung des Querschnitts um 10 % stattfinden; dies ist bei Verwendung von insbesondere Paraffinen als Phasenwechsel-Speichermedium der Fall.

Anschließend an die Schritte (a1) und (b1) findet der Schritt (c1), Verschweißen der Kunststofffolie und Ausbilden der Kunststoffhülle, statt. Der Schritt (c1) kann unter Vakuum vorgenommen werden, um Lufteinschlüsse zu vermeiden. Überdies erfolgt das Verschweißen der Kunststofffolie vorzugsweise in mindestens zwei, insbesondere zwei Schritten, indem mindestens zwei Schweißnähte erzeugt werden, wobei die hierin als erste Schweißnaht bezeichnete Schweißnaht näher am Phasenwechsel-Speichermedium liegt als eine sogenannte zweite Schweißnaht.

Bei dieser Herstellungsweise sind für den Fall der gleichzeitigen Erzeugung mehrerer Speichermedium-Formkörper bzw. Latentwärme-Speicherkörper die einzelnen Speicherkörper in der Regel durch ein Stück verschweißter Folie miteinander verbunden. Eine solche Anordnung kann daher leicht gebogen und an einen Verwendungsort in einem Haushaltsgerät angepasst werden.

Bei der alternativen Ausführungsform des erfindungsgemäßen Verfahrens werden die Schritte (a2), (b2) und (c2) im Allgemeinen so durchgeführt, dass sich bereits im Schritt (b2) allein durch die Schwerkraft und die verwendete Kunststofffolie ein nicht kreisförmiger Querschnitt des Phasenwechsel-Speichermediums ergibt.

Die Erfindung hat zahlreiche Vorteile. Ganz allgemein kann ein Haushaltsgerät mit einem Latentwärme-Speicherkörper mit einer verbesserten Energie-Effizienz betrieben werden. Ein im Latentwärme-Speicherkörper vorhandenes Latentwärme-Speichermedium kann in den beiden Phasenzustanden sicher eingesetzt werden, wenn eine zum Kapseln verwendete Kunststofffolie nicht platzen kann und/oder das Latentwärme-Speichermedium nicht in direkten Kontakt mit der Umgebung treten kann. Die Wärmeenergie kann besser ausgenutzt werden, da der Wärmeaustausch zwischen dem Latentwärme-Speicherkörper und einer Wärme aufnehmenden oder abgebenden Komponente im Haushaltsgerät in Ausführungsformen der Erfindung verbessert ist. Überdies kann der erfindungsgemäße Latentwärme-Speicherkörper in Ausführungsformen als flexible Anordnung von mehreren Latentwärme-Speicherkörpern eingesetzt werden, die gut an die Raumsituation in einem Haushaltsgerät angepasst werden können.

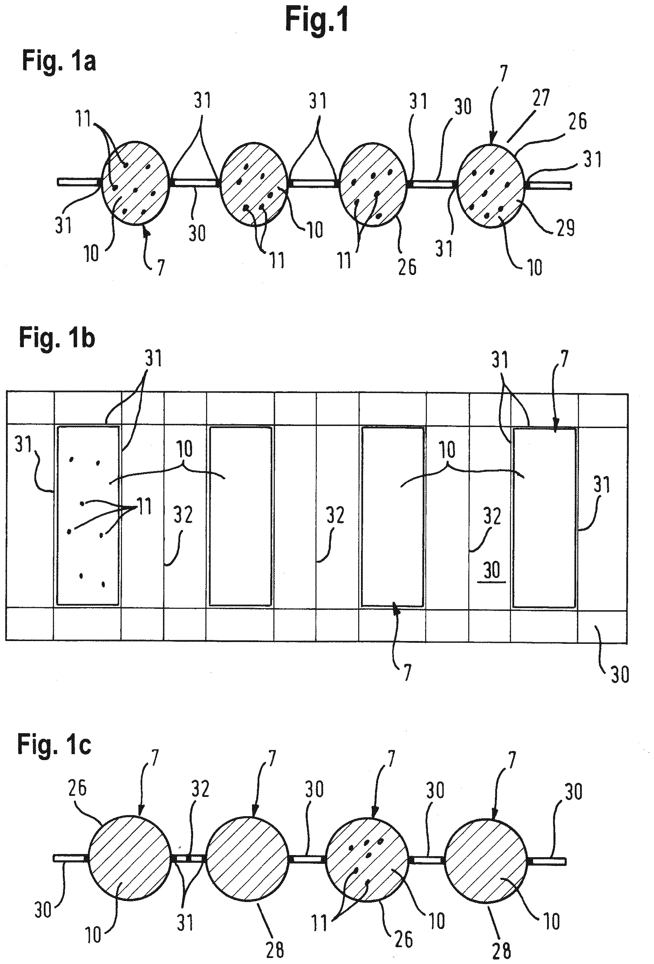

Weitere Einzelheiten der Erfindung ergeben sich unter Bezugnahme auf die Figuren 1 bis 4 aus der nachfolgenden Beschreibung von zwei nicht einschränkenden Ausführungsbeispielen für einen erfindungsgemäßen Latentwärme-Speicherkörper sowie von zwei nicht einschränkenden Ausführungsbeispielen für ein erfindungsgemäßes Haushaltsgerät, in welchem ein erfindungsgemäßes Verfahren durchgeführt werden kann. Das Haushaltsgerät ist hierbei in beiden Fällen ein Kondensationstrockner.
- Fig. 1: zeigt in Fig. 1a eine Seitenansicht von vier miteinander über eine verschweißte Kunststofffolie verbundenen Latentwärme-Speicherkörpern in Stabform gemäß eines ersten Ausführungsbeispiels für einen erfindungsgemäßen Latentwärme-Speicherkörper in einem ersten Zustand des Phasenwechsel-Speichermediums bei einer Temperatur T₁ mit einem im Wesentlichen ellipsenförmigen Querschnitt mit einer Querschnittsfläche Q₁. Fig. 1b zeigt eine Draufsicht auf die Anordnung von Fig. 1a. Fig. 1c zeigt die Seitenansicht der Anordnung von Fig. 1a in einem zweiten Zustand des Phasenwechsel-Speichermediums bei einer Temperatur T₂ > T₁ mit einem kreisförmigen Querschnitt mit einer Querschnittsfläche Q₂ > Q1.

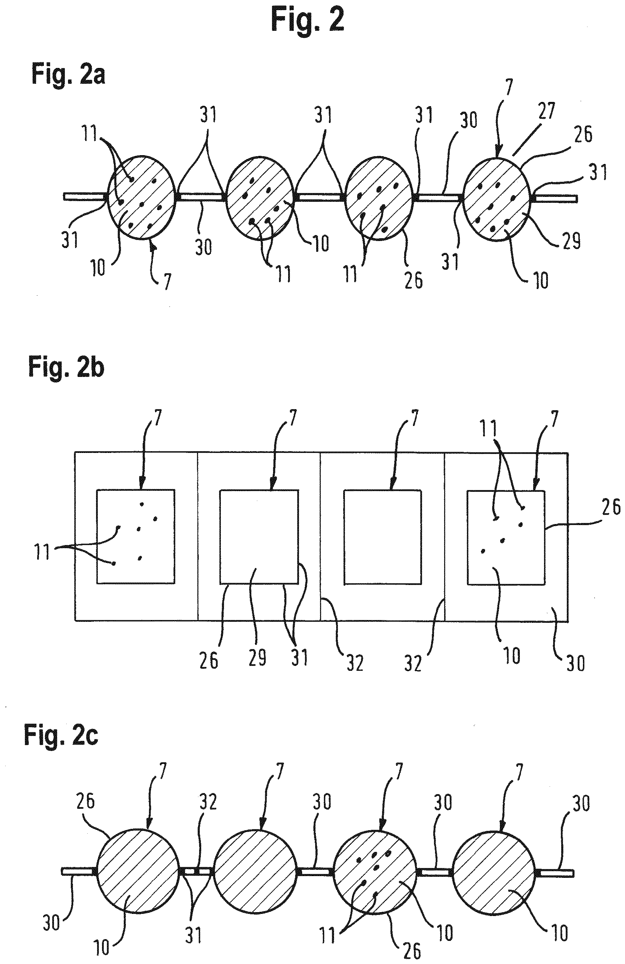

- Fig. 2: zeigt in Fig. 2a eine Seitenansicht von vier miteinander über eine verschweißte Kunststofffolie verbundenen Latentwärme-Speicherkörpern in Kissenform gemäß eines zweiten Ausführungsbeispiels für einen erfindungsgemäßen Latentwärme-Speicherkörper in einem ersten Zustand des Phasenwechsel-Speichermediums bei einer Temperatur T₁ mit einem im Wesentlichen ellipsenförmigen Querschnitt mit einer Querschnittsfläche Q₁. Fig. 2b zeigt eine Draufsicht auf die Anordnung von Fig. 2a. Fig. 2c zeigt die Seitenansicht der Anordnung von Fig. 2a in einem zweiten Zustand des Phasenwechsel-Speichermediums bei einer Temperatur T₂ > T₁ mit einem kreisförmigen Querschnitt mit einer Querschnittsfläche Q₂ > Q₁.

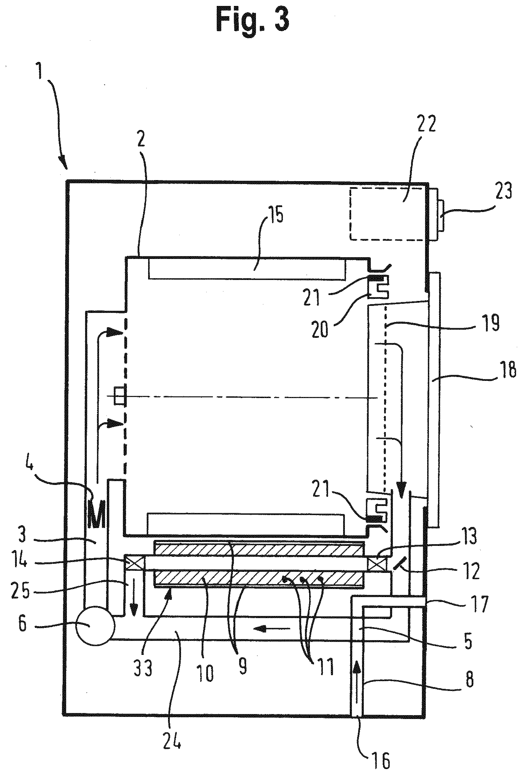

- Figur 3: zeigt einen senkrecht geschnittenen Kondensationstrockner (im Folgenden auch mit "Trockner" abgekürzt) gemäß einer ersten Ausführungsform eines erfindungsgemäßen Haushaltsgerätes, bei der ein Latentwärmespeicher in einem Umluftkanal in unmittelbarer Nähe der Trockenkammer angeordnet ist.

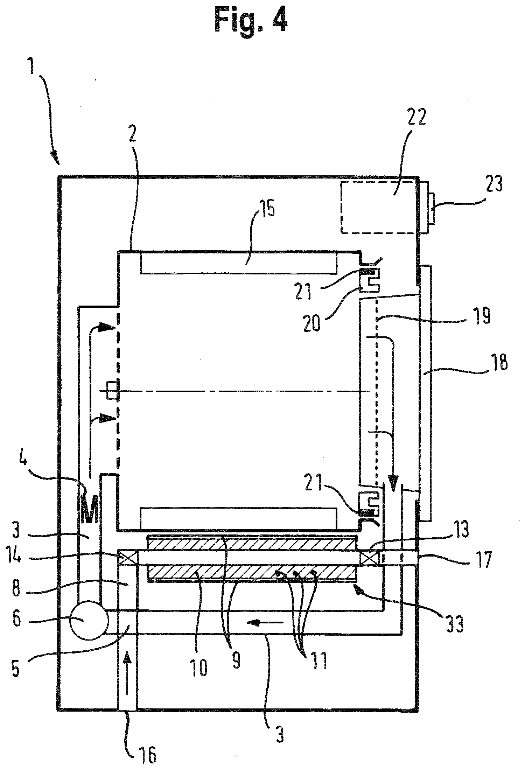

- Figur 4: zeigt einen senkrecht geschnittenen Kondensationstrockner (im Folgenden auch mit "Trockner" abgekürzt) gemäß einer zweiten Ausführungsform eines erfindungsgemäßen Haushaltsgerätes, bei der ein Latentwärmespeicher im Kühlluftkanal in unmittelbarer Nähe der Trockenkammer angeordnet ist.

Fig. 1 zeigt in Fig. 1a eine Seitenansicht von vier miteinander über eine verschweißte Kunststofffolie 30 verbundenen Latentwärme-Speicherkörpern 7 in Stabform gemäß eines ersten Ausführungsbeispiels für einen Latentwärme-Speicherkörper in einem ersten Zustand des Phasenwechsel-Speichermediums bei einer Temperatur T₁ mit einem im Wesentlichen ellipsenförmigen Querschnitt mit einer Querschnittsfläche Q₁.

Die Kunststofffolie 30 weist erste Schweißnähte 31 auf, mit Hilfe derer jeweils eine Kunststoffhülle 26 jeweils einen Formkörper 29 aus einem Phasenwechsel-Speichermedien 10 und einem Zusatzstoff 11 zur Verbesserung der Wärmeleitfähigkeit luftdicht umschließt. Formkörper 29 und Kunststoffhülle 26 bilden somit einen Latentwärme-Speicherkörper 7. Der Formkörper 29 hat einen ellipsenförmigen Querschnitt 27 mit einer Querschnittsfläche Q₁.Die Kunststofffolie 30 verbindet somit einzelne Latentwärme-Speicherkörper 7 zu einer insgesamt biegsamen Anordnung.

Fig. 1b zeigt eine Draufsicht auf die Anordnung von Fig. 1a. Die Draufsicht illustriert, dass die Latentwärme-Speicherkörper 7 als längliche Stäbe mit einem ellipsenförmigen Querschnitt vorliegen. Die Kunststofffolie 30 verbindet dabei insgesamt vier stabförmige Latentwärme-Speicherkörper 7. Gezeigt sind überdies erste Schweißnähte 31, die möglichst nahe an dem Phasenwechsel-Speichermedium 10 liegen, so dass die hier als Teil der Kunststofffolie 30 nicht weiter gezeigte Kunststoffhülle 26 das Speichermedium 10 luftdicht abschließen kann. Schließlich sind zweite Schweißnähte 32 vorhanden, welche weiter vom Speichermedium 10 beabstandet sind und zur Erleichterung der Herstellung der Anordnung sowie deren Handhabung dienen.

Fig. 1c zeigt die Seitenansicht der Anordnung von Fig. 1a in einem zweiten Zustand des Phasenwechsel-Speichermediums 10 bei einer Temperatur T₂ > T₁ mit einem kreisförmigen Querschnitt mit einer Querschnittsfläche Q₂ > Q₁. Als Phasenwechselspeichermedium ist bei dieser Ausführungsform Behensäure oder Stearinsäure verwendet worden. Die Querschnittsfläche Q₂ ist daher ca. 10 % größer als Q₁. Hierbei hat sich vom Übergang vom ersten (festen) zum zweiten (flüssigen) Zustand der Umfang der Querschnittsfläche Q₁ nicht geändert. Durch die Änderung der Form der Querschnittsfläche von elliptisch zu kreisförmig konnte somit ein Anstieg des Druckes auf die Kunststoffhülle 26 vermieden werden.

Fig. 2 zeigt in Fig. 2a eine Seitenansicht von vier miteinander über eine verschweißte Kunststofffolie 30 verbundenen Latentwärme-Speicherkörpern 7 in Kissenform gemäß eines zweiten Ausführungsbeispiels für einen erfindungsgemäßen Latentwärme-Speicherkörper in einem ersten Zustand des Phasenwechsel-Speichermediums bei einer Temperatur T₁ mit einem im Wesentlichen ellipsenförmigen Querschnitt 27 mit einer Querschnittsfläche Q₁.

Die Kunststofffolie 30 weist erste Schweißnähte 31 auf, mit Hilfe derer jeweils eine Kunststoffhülle 26 jeweils einen Formkörper 29 aus einem Phasenwechsel-Speichermedien 10 und einem Zusatzstoff 11 zur Verbesserung der Wärmeleitfähigkeit luftdicht umschließt. Formkörper 29 und Kunststoffhülle 26 bilden somit einen Latentwärme-Speicherkörper 7. Der Formkörper 29 hat einen ellipsenförmigen Querschnitt 27 mit einer Querschnittsfläche Q₁. Die Kunststofffolie 30 verbindet somit einzelne Latentwärme-Speicherkörper 7 zu einer insgesamt biegsamen Anordnung.

Fig. 2b zeigt eine Draufsicht auf die Anordnung von Fig. 2a. Im Unterschied zu Fig. 1 sind die Latentwärme-Speicherkörper 7 hier als Kissen ausgebildet, was daran erkennbar ist, dass hier Schweißnähte 31 am Formkörper 29 nahezu die Form eines Quadrates haben. Die ersten Schweißnähte 31 liegen möglichst nahe an dem Phasenwechsel-Speichermedium 10, so dass die hier als Teil der Kunststofffolie 30 gezeigte Kunststoffhülle 26 das Speichermedium 10 luftdicht abschließen kann. Schließlich sind zweite Schweißnähte 32 vorhanden, welche weiter vom Speichermedium 10 beabstandet sind und zur Erleichterung der Herstellung der Anordnung sowie deren Handhabung dienen.

Fig. 2c zeigt die Seitenansicht der Anordnung von Fig. 2a in einem zweiten Zustand des Phasenwechsel-Speichermediums 10 bei einer Temperatur T₂ > T₁ mit einem kreisförmigen Querschnitt mit einer Querschnittsfläche Q₂ > Q₁. Als Phasenwechselspeichermedium ist auch bei dieser Ausführungsform Behensäure oder Stearinsäure verwendet worden. Die Querschnittsfläche Q₂ ist hier daher ca. 10 % größer als Q₁. Hierbei hat sich vom Übergang vom ersten (festen) zum zweiten (flüssigen) Zustand der Umfang der Querschnittsfläche Q₁ nicht geändert. Durch die Änderung der Form der Querschnittsfläche von elliptisch zu kreisförmig konnte somit ein Anstieg des Druckes auf die Kunststoffhülle 26 vermieden werden.

Figur 3 zeigt einen senkrecht geschnittenen Kondensationstrockner 1 (im Folgenden auch mit "Trockner" abgekürzt) gemäß einer ersten Ausführungsform eines Haushaltsgerätes, bei der ein Latentwärmespeicher 33 in einem zweiten Umluftkanal 25 in unmittelbarer Nähe der Trockenkammer 2 angeordnet ist.

Der in Figur 3 dargestellte Trockner 1 weist eine um eine horizontale Achse drehbare Trommel als Trockenkammer 2 auf, innerhalb welcher Mitnehmer 15 zur Bewegung von Wäsche während einer Trommeldrehung befestigt sind. Prozessluft wird mittels eines Gebläses 6 im Prozessluftkanal 3 über eine elektrische Heizung 4 durch die Trommel 2 geführt. Nach Austritt aus der Trommel 2 wird die mit Feuchtigkeit beladene Prozessluft durch einen ersten Umluftkanal 24 und einen zweiten Umluftkanal 25 geführt, die mittels eines Steuerungsmechanismus 12 so geschlossen und geöffnet werden können, dass der aus der Trommel 2 kommende feuchtwarme Prozessluftstrom beliebig auf den ersten Umluftkanal 24 und den zweiten Umluftkanal 25 aufgeteilt werden kann. Im ersten Umluftkanal 24 wird die feuchtwarme Prozessluft durch einen Luft-Luft-Wärmetauscher 5 geleitet, wo ein Wärmetausch mit Kühlluft, die von einem Kühllufteingang 16 bis zu einem Kühlluftausgang 17 fließt, stattfindet. Die feuchtwarme Prozessluft kühlt unter Kondensation der in ihr enthaltenen Feuchtigkeit ab und wird wiederum über das Gebläse 6 und die elektrische Heizung 4 in die Trockenkammer 2 geführt, wodurch der Prozessluftkreis geschlossen ist. Die kondensierte Feuchtigkeit wird in einem in Fig. 3 nicht gezeigten Kondensatbehälter aufgefangen.

Der zweite Umluftkanal 25 wird dagegen durch einen Latentwärmespeicher 33 geleitet, wo die feuchtwarme Prozessluft durch Übertragung der in ihr enthaltenen Wärmeenergie auf ein Phasenwechsel-Speichermedium 10, das hier ein Paraffin ist, abgekühlt wird. Im Latentwärmespeicher 33 ist eine Vielzahl von hier nicht näher gezeigten Latentwärme-Speicherkörpern vorhanden sowie ein hier ebenfalls nicht näher gezeigtes Umströmungsmedium wie z.B. Luft oder eine Flüssigkeit, welche einen Wärmeaustausch zwischen den Latentwärme-Speicherkörpern und der feuchtwarmen Prozessluft ermöglicht.

Die Feuchtigkeit in der Prozessluft kann auch hier kondensieren und in einem hier nicht gezeigten Kondensatbehälter aufgefangen werden. Das Paraffin kann Wärmenergie durch einen Phasenübergang von fest nach flüssig speichern. Im Speichermedium Paraffin 10 sind als erster Zusatzstoff mehrwandige Kohlenstoffnanoröhren mit einem mittleren Durchmesser der Röhren von 13 bis 16 nm in einer Menge von 5 Gew.-% dispergiert, bezogen auf die Gesamtmasse von Speichermedium und kohlenstoffhaltigen Zusatzstoffen. Nicht gesondert gezeigt ist ein Anteil an geblähtem Graphit als zweitem kohlenstoffhaltigen Zusatzstoff in einer Menge von 4 Gew.-% bezogen auf das Gesamtmasse von Speichermedium und kohlenstoffhaltigen Zusatzstoffen. Im Latentwärmespeicher 33 ist das Speichermedium 10 von einer Latentspeicherwand 9 umgeben, die vorliegend aus einem thermoplastischen Kunststoff mit einem Anteil von 5 Gew.-% Kohlenstoffnanoröhren mit einem mittleren Durchmesser der Röhren von 13 bis 16 nm, bezogen auf die gesamte Masse aus thermoplastischem Kunststoff und Kohlenstoffnanoröhren, gebildet ist.

Die abgekühlte Prozessluft im zweiten Umluftkanal 25 gelangt anschließend wieder mittels des Gebläses 6 in den Prozessluftkanal 3. Hierzu vereinigen sich vor dem Gebläse 6 wieder der erste Umluftkanal 24 und der zweite Umluftkanal 25.

Zur Trocknung von hier nicht näher gezeigten Wäschestücken in der Trommel 2 wird von der elektrischen Heizung 4 erwärmte Luft von hinten, d.h. von der einer Trocknertür 18 gegenüberliegenden Seite der Trommel 2, durch deren gelochten Boden in die Trommel 2 geleitet, kommt dort mit der zu trocknenden Wäsche in Berührung und strömt durch die Befüllöffnung der Trommel 2 zu einem Flusensieb 19 innerhalb der die Befüllöffnung verschließenden Trocknertür 18. Anschließend wird der Luftstrom in der Trocknertür 18 nach unten umgelenkt.

Nach Beendigung des Phasenübergangs im Speichermedium 10 ist der Latentwärmespeicher 33 aufgeladen. Dieser Zustand ist über eine Abnahme der von zwei vor und hinter dem Latentwärmespeicher 33 angeordneten Temperatursensoren, einem ersten Temperatursensor 13 und einem zweiten Temperatursensor 14, gemessenen Temperaturdifferenz feststellbar. Die Temperaturdifferenz wird einer Steuereinrichtung 22 übermittelt, welche sie in Hinblick auf die Aufladung des Latentwärmespeichers 33 auswertet und eine Abschaltung der elektrischen Heizung 4 veranlasst. Die Temperatur der in die Trockenkammer 2 eintretenden Prozessluft sinkt darauf hin und die Trocknung wird aufgrund der Wärmeübertragung vom Latentwärmespeicher 33 auf die Trockenkammer 3 auf einem geringeren Temperaturniveau weitergeführt. Der Abstand zwischen der Trockenkammer 2 und dem Latentwärmespeicher 33 beträgt vorliegend von 5 bis 10 mm.

Bei einer festgestellten Entladung des Latentwärmespeichers 33 (Beendigung des Phasenübergangs im Speichermedium von flüssig nach fest), die ebenfalls durch Auswertung der Temperaturmessungen mittels der beiden Temperatursensoren 13 und 14 festgestellt werden kann, kann die elektrische Heizung 4 wieder angeschaltet werden. Daraufhin steigt die Temperatur der Prozessluft und damit der Kühlluft nach Durchgang durch den Luft-Luft-Wärmetauscher 5, so dass der Latentwärmespeicher 33 und damit die in ihm enthaltenen Latentwärme-Speicherkörper wieder aufgeladen werden.

Durch die Führung der Prozessluft durch zwei Umluftkanäle, zwischen denen der Prozessluftstrom aufgeteilt werden kann, kann der Latentwärmespeicher 33 bei dieser Ausführungsform sehr flexibel unter Berücksichtigung der jeweiligen Betriebsbedingungen des Trockners 1 eingesetzt werden.

Die Trommel 2 wird in der in Fig. 3 gezeigten Ausführungsform am hinteren Boden mittels eines Drehlagers und vorne mittels eines Lagerschildes 20 gelagert, wobei die Trommel 2 mit einer Krempe auf einem Gleitstreifen 21 am Lagerschild 20 aufliegt und so am vorderen Ende gehalten wird. Die Steuerung des Trockners erfolgt über die Steuereinrichtung 22, die vom Benutzer über eine Bedieneinheit 23 geregelt werden kann.

Figur 4 zeigt einen senkrecht geschnittenen Kondensationstrockner (im Folgenden auch mit "Trockner" abgekürzt) gemäß einer zweiten Ausführungsform eines Haushaltsgerätes, bei der ein Latentwärmespeicher 33 im Kühlluftkanal 8 in unmittelbarer Nähe der Trockenkammer 2 angeordnet ist.

Der in Figur 4 dargestellte Trockner 1 weist eine um eine horizontale Achse drehbare Trommel als Trockenkammer 2 auf, innerhalb welcher Mitnehmer 15 zur Bewegung von Wäsche während einer Trommeldrehung befestigt sind. Prozessluft wird mittels eines Gebläses 6 im Prozessluftkanal 3 über eine elektrische Heizung 4 durch die Trommel 2 geführt. Nach Austritt aus der Trommel 2 wird die mit Feuchtigkeit beladene Prozessluft im Prozessluftkanal 3 durch einen Luft-Luft-Wärmetauscher 5 geleitet, wo ein Wärmetausch mit Kühlluft, die von einem Kühllufteingang 16 stammt, stattfindet. Die Prozessluft kühlt unter Kondensation der in ihr enthaltenen Feuchtigkeit ab und wird wiederum über das Gebläse 6 und die elektrische Heizung 4 in die Trockenkammer 2 geführt, wodurch der Prozessluftkreis geschlossen ist. Die kondensierte Feuchtigkeit wird in einem in Fig. 2 nicht gezeigten Kondensatbehälter aufgefangen. Die im Luft-Luft-Wärmetauscher 5 erwärmte Kühlluft wird bei dieser Ausführungsform durch einen Latentwärmespeicher 33 geleitet, wo sie durch Übertragung von Wärmeenergie von der erwärmten Kühlluft auf ein Speichermedium 10, das hier ein Paraffin ist, abgekühlt wird. Im Latentwärmespeicher 33 ist eine Vielzahl von hier nicht näher gezeigten Latentwärme-Speicherkörpern vorhanden sowie ein hier ebenfalls nicht näher gezeigtes Umströmungsmedium wie z.B. Luft oder eine Flüssigkeit, welche einen Wärmeaustausch zwischen den Latentwärme-Speicherkörpern und der feuchtwarmen Prozessluft ermöglicht.

Das Paraffin kann Wärmenergie durch einen Phasenübergang von fest (erster Zustand) nach flüssig (zweiter Zustand) speichern. Im Speichermedium Paraffin 10 sind als erster Zusatzstoff mehrwandige Kohlenstoffnanoröhren mit einem mittleren Durchmesser der Röhren von 13 bis 16 nm in einer Menge von 5 Gew.-%, bezogen auf die Gesamtmasse von Speichermedium und kohlenstoffhaltigen Zusatzstoffen, dispergiert. Nicht gesondert gezeigt ist ein Anteil an geblähtem Graphit als zweitem kohlenstoffhaltigen Zusatzstoff in einer Menge von 4 Gew.-%, bezogen auf die Gesamtmasse von Speichermedium und kohlenstoffhaltigen Zusatzstoffen. Im Latentwärmespeicher 33 ist das Speichermedium 10 von einer Speichermediumwand 9 umgeben, die vorliegend aus einem thermoplastischen Kunststoff mit einem Anteil von 5 Gew.-% Kohlenstoffnanoröhren mit einem mittleren Durchmesser der Röhren von 13 bis 16 nm, bezogen auf die gesamte Masse aus thermoplastischem Kunststoff und Kohlenstoffnanoröhren gebildet ist.

Die abgekühlte Kühlluft wird anschließend über einen Kühlluftausgang 17 in den Aufstellraum des Trockners 1 geleitet.

Zur Trocknung von hier nicht näher gezeigten Wäschestücken in der Trommel 2 wird von der elektrischen Heizung 4 erwärmte Luft von der einer Trocknertür 18 gegenüberliegenden Seite der Trommel 2, durch deren gelochten Boden in die Trommel 3 geleitet, kommt dort mit der zu trocknenden Wäsche in Berührung und strömt durch die Befüllöffnung der Trommel 2 zu einem Flusensieb 19 innerhalb der die Befüllöffnung verschließenden Trocknertür 18. Anschließend wird der Luftstrom in der Trocknertür 18 nach unten umgelenkt und zum Luft-Luft-Wärmetauscher 5 geleitet.

Nach Beendigung des Phasenübergangs im Speichermedium 10 ist der Latentwärmespeicher 33 aufgeladen. Dieser Zustand ist über eine Abnahme der von zwei vor und hinter dem Latentwärmespeicher 33 angeordneten Temperatursensoren 13 und 14 gemessenen Temperaturdifferenz feststellbar. Die Temperaturdifferenz wird einer Steuereinrichtung 22 übermittelt, welche sie in Hinblick auf die Aufladung des Latentwärmespeichers 33 auswertet und eine Abschaltung der elektrischen Heizung 4 veranlasst. Die Temperatur der in die Trockenkammer 2 eintretenden Prozessluft sinkt darauf hin und die Trocknung wird aufgrund der Wärmeübertragung vom Latentwärmespeicher 33 auf die Trockenkammer 2 auf einem geringeren Temperaturniveau weitergeführt. Für eine effiziente Wärmeübertragung beträgt bei der hier gezeigten Ausführungsform der Erfindung der Abstand zwischen der Trockenkammer 2 und dem Latentwärmespeicher 33 von 5 bis 10 mm.

Bei einer festgestellten Entladung des Latentwärmespeichers 33 (Beendigung des Phasenübergangs im Speichermedium von flüssig nach fest), die ebenfalls durch Auswertung der Temperaturmessungen mittels der Temperatursensoren 13 und 14 festgestellt werden kann, kann die elektrische Heizung 4 wieder angeschaltet werden. Daraufhin steigt die Temperatur der Prozessluft und damit der Kühlluft nach Durchgang durch den Luft-Luft-Wärmetauscher 5, so dass der Latentwärmespeicher 33 wieder aufgeladen wird.

Die Trommel 2 wird auch hier am hinteren Boden mittels eines Drehlagers und vorne mittels eines Lagerschildes 20 gelagert, wobei die Trommel 2 mit einer Krempe auf einem Gleitstreifen 21 am Lagerschild 20 aufliegt und so am vorderen Ende gehalten wird. Die Steuerung des Trockners erfolgt über die Steuereinrichtung 22, die vom Benutzer über eine Bedieneinheit 23 geregelt werden kann.

### Bezugszeichenliste

- 1: Trockner, Kondensationstrockner
- 2: Trockenkammer, Trommel
- 3: Prozessluftkanal
- 4: Elektrische Heizung
- 5: Wärmetauscher
- 6: Gebläse
- 7: Latentwärme-Speicherkörper
- 8: Kühlluftkanal
- 9: Latentwärmespeicherwand
- 10: Speichermedium, Phasenwechsel-Speichermedium
- 11: Zusatzstoff (die Wärmeleitfähigkeit erhöhend), z.B. Kohlenstoffnanoröhren
- 12: Steuerungsmechanismus für den ersten und zweiten Umluftkanal
- 13: Erster Temperatursensor
- 14: Zweiter Temperatursensor
- 15: (Wäsche)Mitnehmer
- 16: Kühllufteingang
- 17: Kühlluftausgang
- 18: Trocknertür
- 19: Flusensieb
- 20: Lagerschild
- 21: Gleitstreifen
- 22: Steuereinrichtung
- 23: Bedieneinheit
- 24: Erster Umluftkanal
- 25: Zweiter Umluftkanal
- 26: Kunststoffhülle
- 27: (erste) Querschnittsform mit einer Querschnittsfläche Q₁
- 28: (zweite) Querschnittsform mit einer Querschnittsfläche Q₂
- 29: Formkörper, enthaltend Speichermedium und ggf. Zusatzstoff(e)
- 30: Kunststofffolie
- 31: Erste Schweißnaht (am Speichermedium)
- 32: Zweite Schweißnaht (vom Speichermedium entfernt)
- 33: Latentwärmespeicher

## Patentansprüche

1. Latentwärme-Speicherkörper (7), umfassend ein Phasenwechsel-Speichermedium (10) in einer Kunststoffhülle (26), wobei der Latentwärme-Speicherkörper (7) derart ausgestaltet ist, dass er in einem ersten Zustand des Phasenwechsel-Speichermediums (10) bei einer Temperatur T₁ eine von einer Kreisform abweichende Querschnittsfläche Q₁ (27) und in einem zweiten Zustand des Phasenwechsel-Speichermediums (10) bei einer Temperatur T₂ > T₁ eine Querschnittsfläche Q₂ > Q₁ hat, und beim Übergang vom ersten in den zweiten Zustand ein Phasenwechsel stattfindet, **dadurch gekennzeichnet, dass** der Latentwärme-Speicherkörper (7) im ersten Zustand einen runden, aber nicht kreisrunden Querschnitt (27) aufweist und im zweiten Zustand einen kreisförmigen Querschnitt (28) aufweist und die Kunststoffhülle (26) von dem Phasenwechsel-Speichermedium (10) vollständig ausgefüllt ist, so dass insbesondere auch kein Luft enthaltender Hohlraum ausgebildet wird, und ein Quotient Q = Q₂/Q₁ größer ist als ein Quotient U = U₂/U₁, wobei U₁ der Umfang der Querschnittsfläche Q₁ ist und U₂ der Umfang der Querschnittsfläche Q₂ ist, und wobei der Quotient U im Bereich von 1,0 bis 1,10 liegt und die Zunahme der Querschnittsfläche von Q₁ zu Q₂ 5 bis 15 %, bezogen auf Q₁, beträgt.

2. Haushaltsgerät (1) mit einem Latentwärme-Speicherkörper (7) gemäß Anspruch 1.

3. Haushaltsgerät (1) nach Anspruch 2 , **dadurch gekennzeichnet, dass** die Kunststoffhülle (26) aus einem thermoplastischen Kunststoff besteht oder diesen enthält.

4. Haushaltsgerät (1) nach einem der Ansprüche 2 bis 3, **dadurch gekennzeichnet, dass** das Phasenwechsel-Speichermedium (10) und/oder die Kunststoffhülle (26) einen die Wärmeleitfähigkeit erhöhenden Zusatzstoff (11) enthält.

5. Haushaltsgerät nach Anspruch 4, **dadurch gekennzeichnet, dass** der Zusatzstoff (11) Kohlenstoff enthält oder aus diesem besteht.

6. Haushaltsgerät nach Anspruch 5, **dadurch gekennzeichnet, dass** der Zusatzstoff (11) ausgewählt ist unter Graphit, Kohlenstoffnanoröhren (CNTs) und intrinsisch elektrisch leitfähigen organischen Polymeren.

7. Haushaltsgerät (1) nach einem der Ansprüche 2 bis 6, **dadurch gekennzeichnet, dass** das Phasenwechsel-Speichermedium (10) mindestens ein anorganisches Salzhydrat und/oder eine organische Verbindung enthält.

8. Haushaltsgerät (1) nach Anspruch 7, **dadurch gekennzeichnet, dass** das Phasenwechsel-Speichermedium (10) ein Salzhydrat enthält, das mindestens ein Salz aus der Gruppe enthält, die aus Natriumacetat, Natriumthiosulfat, Magnesiumnitrat, Ammoniumnitrat und Magnesiumchlorid besteht.

9. Haushaltsgerät (1) nach einem der Ansprüche 2 bis 7, **dadurch gekennzeichnet, dass** das Phasenwechsel-Speichermedium (10) ein Paraffin enthält.

10. Haushaltsgerät (1) nach einem der Ansprüche 2 bis 9, **dadurch gekennzeichnet, dass** das Haushaltsgerät ein Trockner, ein Waschtrockner, eine Waschmaschine oder eine Geschirrspülmaschine ist.

11. Verfahren zum Betrieb eines Haushaltsgerätes (1) mit einem Latentwärme-Speicherkörper (7), umfassend ein Phasenwechsel-Speichermedium (10), wobei sich im Latentwärme-Speicherkörper (7) das Phasenwechsel-Speichermedium (10) in einer Kunststoffhülle (28) befindet und der Latentwärme-Speicherkörper (7) derart ausgestaltet ist, dass er in einem ersten Zustand des Phasenwechsel-Speichermediums (10) bei einer Temperatur T₁ eine von einer Kreisform abweichende Querschnittsfläche Q₁ (27) und in einem zweiten Zustand des Phasenwechsel-Speichermediums (10) bei einer Temperatur T₂ > T₁ eine Querschnittsfläche Q₂ > Q₁ hat, und beim Übergang vom ersten in den zweiten Zustand ein Phasenwechsel stattfindet, **dadurch gekennzeichnet, dass** der Latentwärme-Speicherkörper (7) im ersten Zustand einen runden, aber nicht kreisrunden Querschnitt (27) aufweist und im zweiten Zustand einen kreisförmigen Querschnitt (28) aufweist und die Kunststoffhülle (26) von dem Phasenwechsel-Speichermedium (10) vollständig ausgefüllt ist, so dass insbesondere auch kein Luft enthaltender Hohlraum ausgebildet wird, und ein Quotient Q = Q₂/Q₁ größer ist als ein Quotient U = U₂/U₁, wobei U₁ der Umfang der Querschnittsfläche Q₁ ist und U₂ der Umfang der Querschnittsfläche Q₂ ist, und wobei der Quotient U im Bereich von 1,0 bis 1,10 liegt und die Zunahme der Querschnittsfläche von Q₁ zu Q₂ 5 bis 15 %, bezogen auf Q₁, beträgt. ferner **dadurch gekennzeichnet, dass** eine im Haushaltsgerät (1) erzeugte oder dem Haushaltsgerät (1) zugeführte Wärmeenergie im Latentwärme-Speicherkörper (7) über einen Phasenwechsel im Phasenwechsel-Speichermedium (10) gespeichert wird.

12. Verfahren zur Herstellung eines Latentwärme-Speicherkörpers (7), umfassend ein Phasenwechsel-Speichermedium (10) in einer Kunststoffhülle (26), wobei der Latentwärme-Speicherkörper (7) derart ausgestaltet ist, dass er in einem ersten Zustand des Phasenwechsel-Speichermediums (10) bei einer Temperatur T₁ eine Querschnittsfläche Q₁ (27) und in einem zweiten Zustand des Phasenwechsel-Speichermediums (10) bei einer Temperatur T₂ > T₁ eine Querschnittsfläche Q₂ > Q₁ hat, und beim Übergang vom ersten in den zweiten Zustand ein Phasenwechsel stattfindet, **dadurch gekennzeichnet, dass** der Latentwärme-Speicherkörper (7) im ersten Zustand einen runden, aber nicht kreisrunden Querschnitt (27) aufweist und im zweiten Zustand einen kreisförmigen Querschnitt (28) aufweist und die Kunststoffhülle (26) von dem Phasenwechsel-Speichermedium (10) vollständig ausgefüllt ist, so dass insbesondere auch kein Luft enthaltender Hohlraum ausgebildet wird, und ein Quotient Q = Q₂/Q₁ größer ist als ein Quotient U = U₂/U₁, wobei U₁ der Umfang der Querschnittsfläche Q₁ ist und U₂ der Umfang der Querschnittsfläche Q₂ ist, und wobei der Quotient U im Bereich von 1,0 bis 1,10 liegt und die Zunahme der Querschnittsfläche von Q₁ zu Q₂ 5 bis 15 %, bezogen auf Q₁, beträgt; wobei das Verfahren die folgenden Schritte umfasst:
(a) Bereitstellen des Phasenwechsel-Speichermediums (10);
(b) Umhüllen des Phasenwechsel-Speichermediums (10) mit einer Kunststofffolie (30);
(c) Verschweißen der Kunststofffolie (30) und Ausbilden eines Latentwärme-Speicherkörpers (7), umfassend einen Formkörper (29), welcher das Phasenwechsel-Speichermedium (10) im ersten Zustand mit einem runden, aber nicht kreisförmigen Querschnitt mit einer Querschnittsfläche Q₁ enthält.

## Claims

1. Latent heat storage body (7), comprising a phase change storage medium (10) in a plastic sheath (26), wherein the latent heat storage body (7) is designed such that in a first state of the phase change storage medium (10) at a temperature T₁, it has a cross-sectional surface Q₁ (27) which deviates from an O-shape and in a second state of the phase change storage medium (10) at a temperature T₂ > T₁, it has a cross-sectional surface Q₂ > Q₁ and with the transition from the first into the second state, a phase change takes place, **characterised in that** the latent heat storage body (7) in the first state has a round but not O-shaped cross-section (27) and in the second state has a circular cross-section (28) and the plastic sheath (26) is filled completely by the phase change storage medium (10) so that in particular a cavity which does not contain air is formed and a quotient Q = Q₂/Q₁ is larger than a quotient U = U₂/U₁, wherein U₁ is the periphery of the cross-sectional surface Q₁ and U₂ is the periphery of the cross-sectional surface Q₂ and wherein the quotient U lies in the range of 1.0 to 1.10 and the increase in the cross-sectional surface from Q₁ to Q₂ amounts to 5 to 15%, with respect to Q₁.

2. Household appliance (1) with a latent heat storage body (7) according to claim 1.

3. Household appliance (1) according to claim 2, **characterised in that** the plastic sheath (26) consists of a thermoplastic plastic or contains the same.

4. Household appliance (1) according to one of the claims 2 to 3, **characterised in that** the phase change storage medium (10) and/or the plastic sheath (26) contains an admixture (11) which increases the heat conductivity.

5. Household appliance according to claim 4, **characterised in that** the additive (11) contains carbon or consists of the same.

6. Household appliance according to claim 5, **characterised in that** the additive (11) is selected from graphite, carbon nanotubes (CNTs) and intrinsically electrically conductive organic polymers.

7. Household appliance (1) according to one of claims 2 to 6, **characterised in that** the phase change storage medium (10) contains at least one inorganic salt hydrate and/or an organic compound.

8. Household appliance (1) according to claim 7, **characterised in that** the phase change storage medium (10) contains a salt hydrate, which contains at least one salt from the group comprising sodium acetate, sodium thiosulphate, magnesium nitrate, ammonium nitrate and magnesium chloride.

9. Household appliance (1) according to one of claims 2 to 7, **characterised in that** the phase change storage medium (10) contains a paraffin.

10. Household appliance (1) according to one of claims 2 to 9, **characterised in that** the household appliance is a dryer, a washer-dryer, a washing machine or a dishwasher.

11. Method for operating a household appliance (1) with a latent heat storage body (7), comprising a phase change storage medium (10), wherein in the latent heat storage body (7) the phase change storage medium (10) is located in a plastic sheath (28) and the latent heat storage body (7) is designed such that in a first state of the phase change storage medium (10) at a temperature T₁ it has a cross-sectional surface Q₁ (27) which deviates from a circular shape and in a second state of the phase change storage medium (10) at a temperature T₂ > T₁ it has a cross-sectional surface Q₂ > Q₁ and with the transition from the first into the second state, a phase change takes place, **characterised in that** in the first state the latent heat storage body (7) has a round, but not O-shaped cross-section (27) and in the second state it has a circular cross-section (28), and the plastic sheath (26) is filled completely by the phase change storage medium (10) so that in particular a cavity not containing air is embodied and a quotient Q=Q₂/Q₁ is larger than a quotient U = U₂/U₁, wherein U₁ is the periphery of the cross-sectional surface Q₁ and U₂ is the periphery of the cross-sectional surface Q₂ and wherein the quotient U lies in the range of 1.0 to 1.10 and the increase in the cross-sectional surface from Q₁ to Q₂ amounts to 5 to 15% with respect to Q₁, further **characterised in that** a heat energy generated in the household appliance (1) or supplied to the household appliance (1) is stored in the latent heat storage body (7) by way of a phase change in the phase change storage medium (10).

12. Method for producing a latent heat storage body (7), comprising a phase change storage medium (10) in a plastic sheath (26), wherein the latent heat storage body (7) is designed so that in a first state of the phase change storage medium (10) at a temperature T₁ it has a cross-sectional surface Q₁ (27) and in a second state of the phase change storage medium (10) at a temperature T₂ > T₁ it has a cross-sectional surface Q₂ > Q₁ and with the transition from the first into the second state a phase change takes place, **characterised in that** in the first state the latent heat storage body (7) has a round, but not O-shaped cross-section (27), and in the second state it has a circular cross-section (28), and the plastic sheath (26) is filled completely by the phase change storage medium (10) so that in particular a cavity which does not contain air is embodied and a quotient Q = Q₂/Q₁ is larger than a quotient U=U_{2/}U₁ wherein U₁ is the periphery of the cross-sectional surface Q₁ and U₂ is the periphery of the cross-sectional surface Q₂ and wherein the quotient U lies in the range of 1.0 to 1.10 and the increase in the cross-sectional surface from Q₁ to Q₂ amounts to 5 to 15% with respect to Q₁, wherein the method comprises the following steps:
(a) providing the phase change storage medium (10);
(b) enveloping the phase change storage medium (10) with a plastic film (30);
(b) welding the plastic film (30) and forming a latent heat storage body (7), comprising a mould (29) which contains the phase change storage medium (10) in the first state with a round but not circular cross-section with a cross-sectional surface Q₁.

## Revendications

1. Corps de stockage de chaleur latente (7), comprenant un milieu de stockage à changement de phase (10) dans une gaine plastique (26), dans lequel le corps de stockage de chaleur latente (7) est configuré de telle manière qu'il présente, dans un premier état du milieu de stockage à changement de phase (10) à une température T₁, une surface de section transversale Q₁ (27) s'écartant d'une forme circulaire et, dans un deuxième état du milieu de stockage à changement de phase (10) à une température T₂ > T₁, une surface de section transversale Q₂ > Q₁, et un changement de phase se produit lors de la transition du premier état au deuxième état, **caractérisé en ce que** le corps de stockage de chaleur latente (7) présente dans le premier état une section transversale ronde (27), mais pas circulaire et dans le deuxième état une section transversale circulaire (28) et la gaine plastique (26) est entièrement remplie avec le milieu de stockage à changement de phase (10), de manière à ce qu'en particulier aucune cavité contenant de l'air ne soit formée, et un quotient Q = Q₂/Q₁ est supérieur à un quotient U = U₂/U₁, U₁ étant la circonférence de la surface de section transversale Q₁ et U₂ étant la circonférence de la surface de section transversale Q₂, dans lequel le quotient U est de 1,0 à 1,10 et l'augmentation de la surface de section transversale de Q₁ à Q₂, est de 5 à 15 % par rapport à Q₁.

2. Appareil électroménager (1) comprenant un corps de stockage de chaleur latente (7) selon la revendication 1.

3. Appareil électroménager (1) selon la revendication 2, **caractérisé en ce que** la gaine plastique (26) est constituée d'une matière thermoplastique ou contient cette dernière.

4. Appareil électroménager (1) selon l'une des revendications 2 à 3, **caractérisé en ce que** le milieu de stockage à changement de phase (10) et/ou la gaine plastique (26) contient un adjuvant (11) augmentant la conductivité thermique.

5. Appareil électroménager selon la revendication 4, **caractérisé en ce que** l'adjuvant (11) contient du carbone ou est constitué de celui-ci.

6. Appareil électroménager selon la revendication 5, **caractérisé en ce que** l'adjuvant est sélectionné parmi du graphite, des nanotubes de carbone (CNT) et des polymères organiques intrinsèquement électroconducteurs.

7. Appareil électroménager (1) selon l'une des revendications 2 à 6, **caractérisé en ce que** le milieu de stockage à changement de phase (10) contient au moins un hydrate de sel inorganique et/ou un composé organique.

8. Appareil électroménager (1) selon la revendication 7, **caractérisé en ce que** le milieu de stockage à changement de phase (10) contient un hydrate de sel, qui comprend au moins un sel issu du groupe comprenant l'acétate de sodium, le thiosulfate de sodium, le nitrate de magnésium, le nitrate d'ammonium et le chlorure de magnésium.

9. Appareil électroménager (1) selon l'une des revendications 2 à 7, **caractérisé en ce que** le milieu de stockage à changement de phase (10) contient une paraffine.

10. Appareil électroménager (1) selon l'une quelconque des revendications 2 à 9, **caractérisé en ce que** l'appareil électroménager est un séchoir, un sèche-linge, une machine à laver ou un lave-vaisselle.

11. Procédé de fonctionnement d'un appareil électroménager (1) comprenant un corps de stockage à chaleur latente (7) qui comprend un milieu de stockage à changement de phase (10), dans lequel le milieu de stockage à changement de phase (10) se trouve dans une gaine plastique (26) dans le corps de stockage à chaleur latente (7), et le corps de stockage de chaleur latente (7) est configuré de telle manière qu'il présente, dans un premier état du milieu de stockage à changement de phase (10) à une température T₁, une surface de section transversale Q₁ (27) s'écartant d'une forme circulaire et, dans un deuxième état du milieu de stockage à changement de phase (10) à une température T₂ > T₁, une surface de section transversale Q₂ > Q₁, et un changement de phase se produit lors de la transition du premier état au deuxième état,
**caractérisé en ce que** le corps de stockage de chaleur latente (7) présente dans le premier état une section transversale (27) ronde, mais pas circulaire et dans le deuxième état une section transversale circulaire (28) et la gaine plastique (26) est entièrement remplie avec le milieu de stockage à changement de phase (10), de manière à ce qu'en particulier aucune cavité contenant de l'air ne soit formée, et un quotient Q = Q₂/Q₁ est supérieur à un quotient U = U₂/U₁, U₁ étant la circonférence de la surface de section transversale Q₁ et U₂ étant la circonférence de la surface de section transversale Q₂, dans lequel le quotient U est de 1,0 à 1,10 et l'augmentation de la surface de section transversale de Q₁ à Q₂, est de 5 à 15 % par rapport à Q₁, **caractérisé en outre en ce qu'**une énergie calorifique produite dans l'appareil électroménager (1) ou amenée dans l'appareil électroménager (1) est stockée dans le corps de stockage à chaleur latente (7) par un changement de phase dans le milieu de stockage à changement de phase (10).

12. Procédé de fabrication d'un corps de stockage à chaleur latente (7) comprenant un milieu de stockage à changement de phase (10) dans une gaine plastique (26) dans lequel le corps de stockage de chaleur latente (7) est configuré de telle manière qu'il présente, dans un premier état du milieu de stockage à changement de phase (10) à une température T₁, une surface de section transversale Q₁ (27) et, dans un deuxième état du milieu de stockage à changement de phase (10) à une température T₂ > T₁, une surface de section transversale Q₂ > Q₁, et un changement de phase se produit lors de la transition du premier état au deuxième état,
**caractérisé en ce que** le corps de stockage de chaleur latente (7) présente dans le premier état une section transversale ronde (27), mais pas circulaire et dans le deuxième état une section transversale circulaire (28) et la gaine plastique (26) est entièrement remplie avec le milieu de stockage à changement de phase (10), de manière à ce qu'en particulier aucune cavité contenant de l'air ne soit formée, et un quotient Q = Q₂/Q₁ est supérieur à un quotient U = U₂/U₁, U₁ étant la circonférence de la surface de section transversale Q₁ et U₂ étant la circonférence de la surface de section transversale Q₂, dans lequel le quotient U est de 1,0 à 1,10 et l'augmentation de la surface de section transversale de Q₁ à Q₂, est de 5 à 15 % par rapport à Q₁, dans lequel le procédé comprend les étapes suivantes :
(a) fourniture du milieu de stockage à changement de phase (10),
(b) enveloppement du milieu de stockage à changement de phase (10) à l'aide d'une feuille plastique (30),
(c) soudage de la feuille de plastique (30) et formation d'un corps de stockage de chaleur latente (7), comprenant un corps moulé (29), qui contient le milieu de stockage à changement de phase (10) présentant dans un premier état une section transversale ronde, mais par circulaire ayant une surface de section transversale Q₁.
